# EUROPEAN PATENT APPLICATION

(11) **EP 3 567 151 A1**
(43) Date of publication of application: **13.11.2019**
(21) Application number: 19178770.4
(22) Date of filing: 11.02.2008
(51) Int. Cl.: D06F 37/20, D06F 31/00

(54) **LAUNDRY TREATING APPARATUS**

(30) Priority: 27.11.2007 KR 20070121646
(62) Divisional of application: 15196299.0
(71) Applicant: LG Electronics Inc., Youngdungpo-gu Seoul 150-721 (KR)
(72) Inventor: LEE, Dong Soo, 153-802 Seoul (KR); WOO, Ki Chul, 153-802 Seoul (KR); KIM, Na Eun, 153-802 Seoul (KR); KIM, Dong Won, 153-802 Seoul (KR); KIM, Sung Min, 153-802 Seoul (KR); KIM, Sung Ryong, 153-802 Seoul (KR)
(74) Representative: Vossius & Partner Patentanwälte Rechtsanwälte mbB

(57) **Abstract**

The present invention discloses a method of controlling a laundry treating device including inputting information on operation in order to operate a first laundry treating device (100) and a second laundry treating device (200) adjacent to the first laundry treating device (100), and operating the first laundry treating device (100) and the second laundry treating device (200) with running a first heater (190) provided at the first laundry treating device (100) and a second heater (290) provided at the second laundry treating device (200) alternatively. (Fig. 1)

## Description

The present invention relates to a laundry treating apparatus capable of washing or drying laundry, and a method of controlling the same.

A washing machine, which is a representative one of laundry treating devices, performs washing, rinsing, and spin-drying operations, in order to remove contaminants attached to laundry using interaction of detergent and water.

A drying machine, which is another representative one of laundry treating devices, is a home appliance for drying wet clothes, etc. Recently, a home appliance having a combined function of a washing machine and a drying machine has widely been used.

Generally, such laundry treating devices are classified into a top loading type and a front loading type in accordance with the laundry loading position.

Typically, a laundry treating device is directly installed on a wood, cement, or tile floor. In this connection, in the case of a front loading type laundry treating device, it is inconvenient for the user to load and unload laundry because the position of the loading/unloading opening of the device is low.

Generally, only one large-capacity washing machine is equipped in a home. When it is desired to wash different kinds of laundry in an independent manner, using the washing machine, it is necessary to operate the washing machine several times.

For example, when it is desired to wash laundry such as adult clothes and laundry such as underclothes or baby clothes in an independent manner, the washing machine operates two times to individually wash the two different kinds of laundry. For this reason, the washing time increases, and the consumption of energy also increases.

Furthermore, it is undesirable to use the large-capacity washing machine in washing a small amount of laundry, in terms of saving of energy, as in conventional cases. This is because the washing course set in the large-capacity washing machine is typical for the case, in which the amount of laundry to be washed is large, so that the amount of water to be consumed in the washing course is large. Also, a large amount of electricity is consumed because it is necessary to rotate a large-size drum or pulsator.

Also, the washing course set in the large-capacity washing machine is typical for general clothes. For this reason, the large-capacity washing machine may be unsuitable for the washing of delicate clothes such as underclothes or baby clothes.

In addition, the large-capacity washing machine is unsuitable in the case in which washing of a small amount of laundry should be frequently performed. Generally, users collect laundry for several days, in order to wash the collected laundry at one time.

However, leaving laundry, in particular, underclothes or baby clothes, without immediately washing them, is undesirable in terms of cleanliness. Furthermore, when such clothes are left for a long period of time, there is a problem in that they cannot be cleanly washed because dirt may be fixed to the clothes.

In this regard, the necessity of a small-size washing machine having a capacity much smaller than the conventional large-capacity washing machine has increased. However, where two small-size washing machines are equipped in a home, there are problems associated with space utility and beauty, even though the size of the washing machines is small.

Accordingly, the present invention is directed to a laundry treating apparatus and a method of controlling the same that substantially obviate one or more problems due to limitations and disadvantages of the related art.

An object of the present invention is to provide a laundry treating apparatus equipped with at least two washing tubs.

Another object of the present invention is to provide a method of controlling a laundry treating apparatus equipped with at least two washing tubs, which can effectively control the laundry treating apparatus.

Still another object of the present invention is to efficiently control heaters of a laundry treating apparatus including at least two washing tubs when washing is carried out using hot water, and thus to safely use the heaters.

Additional advantages, objects, and features of the invention will be set forth in part in the description which follows and in part will become apparent to those having ordinary skill in the art upon examination of the following or may be learned from practice of the invention. The objectives and other advantages of the invention may be realized and attained by the structure particularly pointed out in the written description and claims hereof as well as the appended drawings.

To achieve these objects and other advantages and in accordance with the purpose of the invention, a method of controlling a laundry treating device including inputting information on operation in order to operate a first laundry treating device and a second laundry treating device adjacent to the first laundry treating device, and operating the first laundry treating device and the second laundry treating device with running a first heater provided at the first laundry treating device and a second heater provided at the second laundry treating device alternatively.

In another general aspect, a laundry treating device includes a first laundry treating device a second laundry treating device adjacent to the first laundry treating device and being operable independently of the first laundry treating device a first heater provided at the first laundry treating device a second heater provided at the second laundry treating device and a controlling device to run the first heater and the second heater alternately in operating the first laundry treating device and the second laundry treating device.

It is to be understood that both the foregoing general description and the following detailed description of the present invention are exemplary and explanatory and are intended to provide further explanation of the invention as claimed.

The accompanying drawings, which are included to provide a further understanding of the invention and are incorporated in and constitute a part of this application, illustrate embodiment(s) of the invention and together with the description serve to explain the principle of the invention. In the drawings:
FIG. 1 is a perspective view illustrating an exemplary embodiment of a laundry treating apparatus according to the present invention;
FIG. 2 is a lateral sectional view corresponding to FIG. 1;
FIG. 3 is a table illustrating an exemplary embodiment of a method of controlling the laundry treating apparatus in accordance with the present invention;
FIG. 4 is a table illustrating another embodiment of the laundry treating apparatus control method according to the present invention; and
FIG. 5 is a table illustrating another embodiment of the laundry treating apparatus according to the present invention.

Reference will now be made in detail to the preferred embodiments of the present invention, examples of which are illustrated in the accompanying drawings.

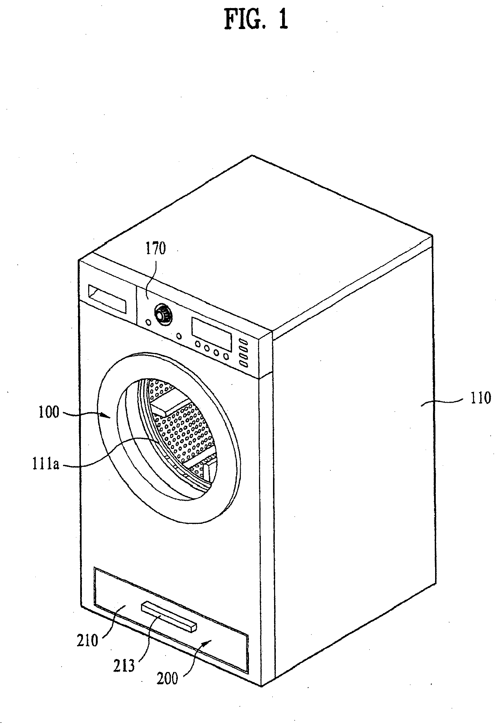

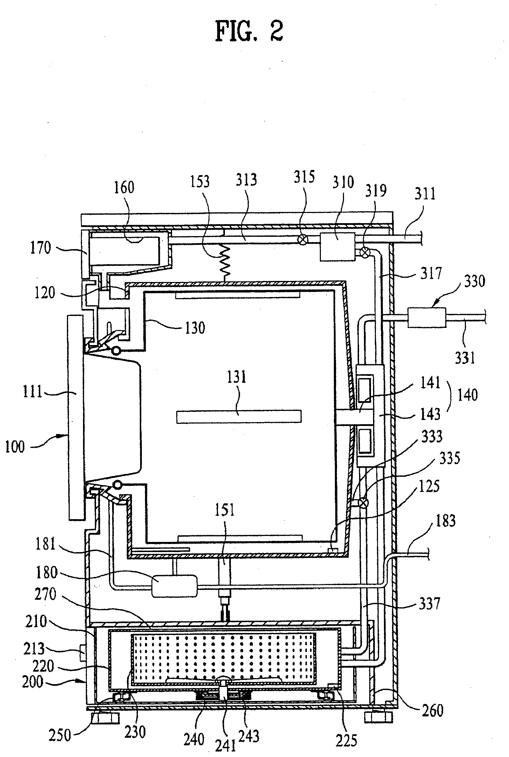

An exemplary embodiment of a laundry treating apparatus according to the present invention will be described with reference to FIGs. 1 and 2.

The laundry treating apparatus includes a cabinet 110 constituting an outer structure of the laundry treating device, a first laundry treating device 100 installed in the cabinet 110, and a second laundry treating device 200 installed in the cabinet 110 in the vicinity of the first laundry treating device 100. The second laundry treating device 200 can operate independently of the first laundry treating device 100.

A control panel 170 is arranged at the front side of the cabinet 110, to control the second laundry treating device 200. At the front side of the cabinet 110, a first door 111 included in the first laundry treating device 100 and a front wall of a case 210 included in the second laundry treating device 200 are also arranged.

The first laundry treating device 100 includes a first washing tub 120, a first drum 130 rotatably installed in the first washing tub 120, and a first driver 140 to drive the first drum 130. The first door 111, which is also included in the first laundry treating device 100, functions to open or close the first drum 130.

The top of the first washing tub 120 is connected to the cabinet 110 by a suspension 153. The bottom of the first washing tub 120 is connected to a mover housing 260 by a first damper 151. Of course, the first washing tub 120 may be formed integrally with the cabinet 110.

The central rotating axis of the first drum 130 is parallel with a floor, on which the laundry treating device is installed. The first drum 130 has an opening 111a open toward the front side of the cabinet 110.

A plurality of lifts, which operate to wash laundry, are arranged on an inner surface of the first drum 130. The lifts 131 raise laundry contained in the first drum 130, and then let the raised laundry fall, to cause frictional force and impact force to be applied to the laundry.

The first driver 140 includes a first drive shaft 141 connected to the first drum 130, and a first motor 143 to rotate the first drive shaft 141. The first driver 140 supports the first washing tub 120 at the rear side of the first washing tub 120, while rotating the first drum 130.

The first door 111 is hinged to the cabinet 110 at the front side of the cabinet 110. The central portion of the first door 111 is configured to allow the user to view the interior of the first drum 130.

The second laundry treating device 200 includes, in addition to the case 210, a second washing tub 220 installed in the case 210, a second drum 230 rotatably installed in the second washing tub 220, a second driver 240 to drive the second drum 230, and a second door 270 to open or close the second drum 230.

The second laundry treating device 200 is received in the mover housing 260, which is arranged beneath the first laundry treating device 100. The second laundry treating device 200 is movable in forward/rearward directions of the cabinet 110. A handle 213 is provided at the front side of the second laundry treating device 200, to move the second laundry treating device 200.

The case 210 can slide along the mover housing 260. The second washing tub 220 is received in the case 210. The second washing tub 220 is coupled to the bottom of the case 210 inside the case 210 by a second damper 250.

The central rotating axis of the second drum 230 is perpendicular to the floor. The second drum 230 has an opening (not shown) formed through the top of the second drum 230. Accordingly, the second door 270 is installed at the top of the second drum 230. Thus, the second laundry treating device 200 is of a top loading type.

The second driver 240 includes a second drive shaft 241 connected to the second drum 230, and a second motor 243 to rotate the second drive shaft 241. The second driver 240 supports the second washing tub 220 at the bottom of the second washing tub 220, while rotating the second drum 230.

The laundry treating apparatus further includes a first heater 190 and a second heater 290 to heat water supplied to the first washing tub 120 and water supplied to the second washing tub 220, respectively.

The first heater 190 is installed in the first washing tub 120, whereas the second heater 290 is installed in the second washing tub 220. The first and second heaters 190 and 290 operate alternately under the control of a controller. For example, the second heater 290 does not operate during the operation of the first heater 190. Similarly, the first heater 190 does not operate during the operation of the second heater 290.

The laundry treating apparatus further includes a water supply unit to supply water from the external of the laundry treating device to the laundry treating device.

The water supply unit includes an external connecting pipe 311 connected to an external water supply source, a water tank 310 to store water supplied through the external connecting pipe 311, a first water supply pipe 313 to guide water from the water tank 310 to the first washing tub 120, and a second water supply pipe 317 to guide water from the water tank 310 to the second washing tub 220.

The water supply unit may also include a first water supply control valve 315 arranged in the first water supply pipe 313, to control the amount of water supplied to the first washing tub 120, and a second water supply control valve 319 arranged in the second water supply pipe 317, to control the amount of water supplied to the second washing tub 220.

The first water supply pipe 313 may be connected, at one end thereof, to the water tank 310, and may be connected, at the other end thereof, to a first detergent box 160. As a result, water, which is guided through the first water supply pipe 313, is supplied to the first washing tub 120 after passing through the first detergent box 160.

Similarly, the second water supply pipe 317 may be connected, at one end thereof, to the water tank 310, and may be connected, at the other end thereof, to a second detergent box (not shown). As a result, water, which is guided through the second water supply pipe 317, is supplied to the second washing tub 220 after passing through the second detergent box.

Alternatively, a single detergent box may be installed. In this case, either the first water supply pipe 313 or the second water supply pipe 317 is connected, at one end thereof, to the water tank 310, and is connected, at the other end thereof, to the single detergent box. Accordingly, in either the case, in which water is supplied to the first washing tub 120, or the case in which water is supplied to the second washing tub 220, water from the water tank 310 always passes through the detergent box.

One end of each line connected to the water tank may be arranged at a level higher than the other end of the line connected to the first and second washing tubs. In this case, water emerging from the water tank can be naturally introduced into the first and second washing tubs in accordance with the water head difference between the opposite ends of the line, without using a pump.

A first temperature sensor 125 may be arranged in the first washing tub 120, to measure the temperature of water in the first washing tub 120. A second temperature sensor 225 may be arranged in the second washing tub 220, to measure the temperature of water in the second washing tub 220.

Meanwhile, a first draining pipe 183 and a first circulating pipe 181 are arranged in the cabinet 110. The first draining pipe 183 functions to outwardly drain water from the first washing tub 120. The first circulating pipe 181 functions to again introduce, into the first washing tub 120, water discharged from the first washing tub 120.

A first circulating pump 180 is arranged at a branch point of the first draining pipe 183 and first circulating pipe 181, to outwardly drain or circulate water emerging from the first washing tub 120. The water emerging from the first washing tub 120 is pumped to spray the pumped water into the first washing tub 120. In accordance with the pumping operation, diverse water flows are generated in the first drum 130, and impact force and frictional force are generated through the water spray. Accordingly, it is possible to achieve an enhancement in washing and rinsing efficiencies.

Similarly, a second draining pipe (not shown) and a second circulating pipe (not shown) are arranged in the cabinet 110. The second draining pipe functions to outwardly drain water from the second washing tub 220. The second circulating pipe functions to again introduce, into the second washing tub 220, water discharged from the second washing tub 220. A second circulating pump (not shown) may also be installed at a branch point of the second draining pipe and second circulating pipe.

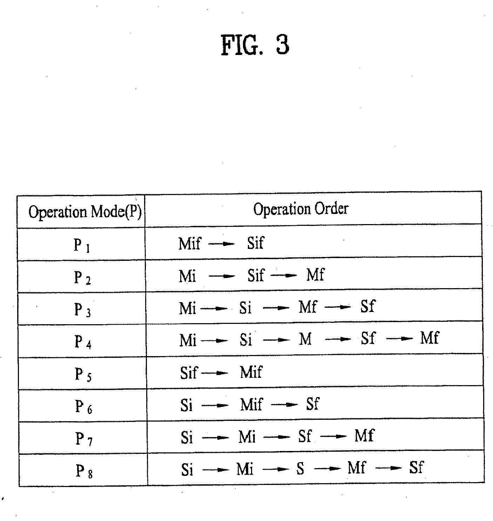

Hereinafter, a procedure for supplying water to the washing tubs of the first and second laundry treating devices when the first and second laundry treating devices operate simultaneously will be described with reference to FIG. 3.

After loading laundry into the first and second laundry treating device, the user may input a command to operate the first and second laundry treating devices.

That is, a laundry treating command may be input to the first and second laundry treating devices before the first heater 190 included in the first laundry treating device and the second heater 290 included in the second laundry treating device operate.

The method of controlling the laundry treating device includes a first heating step for driving the first heater, to heat water supplied to the first washing tub, and a second heating step for driving the second heater, which operates independently of the first heater, to heat water supplied to the second washing tub.

When the first and second heating steps are selectively executed, the priority order of the first and second heating steps may be determined in accordance with a predetermined control algorithm.

The control algorithm may be implemented in various forms. For example, the controller may determine the heater operation order, based on the amount of electricity to be supplied to the first or second heater. Of course, the heater operation order may be determined, based on a predetermined temperature of water heated by the first or second heater.

Alternatively, the controller may determine the heater operation order in accordance with a user's command. Otherwise, there may be a heater operation order previously stored in the controller.

Each operation mode P shown in FIG. 3 represents an operation order of the first and second heaters when the first and second laundry treating devices 100 and 200 operate simultaneously.

In FIG. 3, "M" represents the operation of the first heater of the first laundry treating device, whereas "S" represents the operation of the second heater of the second laundry treating device. The subscript "if" represents the step of initiating the operation of the associated heater, and finishing the operation of the associated heater after continuing the operation of the associated heater until the temperature of water heated by the associated heater reaches a predetermined temperature.

The subscript "i" represents the initiation of the operation of the associated heater, and the subscript "f" represents the finish of the operation of the associated heater. The step without any subscript represents a state in which the associated heater is in operation.

Each of the operation modes P1 to P4 represents an operation mode in the case in which the first heater operates preferentially. On the other hand, each of the operation modes P5 to P8 represents an operation mode in the case in which the second heater operates preferentially.

The operation mode P1 represents the procedure of initiating the operation of the first heater, finishing the operation of the first heater after the water in the first washing tub is heated to a first predetermined temperature (M_{if}), subsequently initiating the operation of the second heater, and finishing the operation of the second heater after the water in the second washing tub is heated to a second predetermined temperature (S_{if}).

The operation mode P2 represents the procedure of initiating the operation of the first heater (Mᵢ), initiating the operation of the second heater after a predetermined time elapses, while stopping the operation of the first heater, finishing the operation of the second heater after the water in the second washing tub is heated to the second predetermined temperature (S_{if}), and finishing the operation of the first heater after the water in the first washing tub is heated to the first predetermined temperature (M_{f}).

In the operation mode P3, the operation of the first heater is preferentially initiated (Mᵢ). After a predetermined time elapses, the operation of the first heater is stopped, and the operation of the second heater is initiated (Sᵢ). After a predetermined time elapses, the operation of the second heater is stopped, and the operation of the first heater is again executed. The operation of the first heater is finished after the water in the first washing tub is heated to the first predetermined temperature (M_{f}). The operation of the second heater is then again executed, and is finished after the water in the second washing tub is heated to the second predetermined temperature (S_{f}).

In the operation mode P4, the operation of the first heater is preferentially initiated (Mᵢ). After a predetermined time elapses, the operation of the first heater is stopped, and the operation of the second heater is initiated (Sᵢ). Subsequently, the operation of the second heater is stopped, and the operation of the first heater is again executed (M). Subsequently, the operation of the first heater is stopped, and the operation of the second heater is again executed. The operation of the second heater is finished after the water in the second washing tub is heated to the second predetermined temperature (S_{f}). The operation of the first heater is then again executed, and is finished after the water in the first washing tub is heated to the first predetermined temperature (M_{f}).

Meanwhile, the operation modes P5, P6, P7, and P8 are similar to the operation modes P1, P2, P3, and P4, respectively. However, they are reverse to each other in terms of the operation order of the first and second heaters, namely, the order of M and S.

For example, the operation mode P5 represents the procedure of initiating the operation of the second heater, finishing the operation of the second heater after the water in the second washing tub is heated to the second predetermined temperature (S_{if}), subsequently initiating the operation of the first heater, and finishing the operation of the first heater after the water in the first washing tub is heated to the first predetermined temperature (M_{if}).

Thus, as in the operation mode P1 or P5, the first and second heating steps may be executed such that one heating step is initiated after the finish of the other heating step.

Also, as in the operation modes P3 and P4 and the operations P7 and P8, the first and second heating steps may be alternately executed until the temperature of water supplied to one of the first and second washing tubs reaches the associated predetermined temperature.

In each operation mode, the operation times of the first and second heaters may be set to be different from each other.

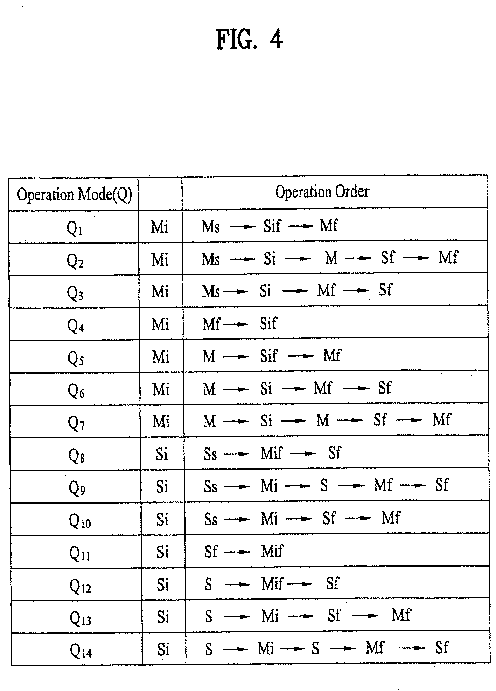

Hereinafter, a procedure for driving the first and second heaters when one of the first and second laundry treating devices starts to operate during the operation of the other laundry treating device will be described with reference to FIG. 4.

In this case, a command to operate the former laundry treating device is input during the operation of the latter laundry treating device.

In response to the command, the controller may stop or continue the operation of the heater included in the laundry treating device, which is in operation.

The operation order of the first and second heaters may be determined in accordance with a predetermined control algorithm. The control algorithm may be implemented in various forms. For example, the controller may determine the heater operation order, based on amounts of heat respectively required to heat water supplied to the first and second washing tubs 120 and 220 to associated predetermined temperatures.

Alternatively, the controller may determine the heater operation order, based on amounts of electricity to be respectively supplied to the first and second heaters. The heater operation order may also be determined in accordance with a user's command. Otherwise, there may be a heater operation order previously stored in the controller.

In FIG. 4, each of the operation modes Q1 to Q7 represents an operation mode in the case in which the second laundry treating device starts to operate during the operation of the first laundry treating device. On the other hand, each of the operation modes Q8 to Q14 represents an operation mode in the case in which the first laundry treating device starts to operate during the operation of the second laundry treating device.

Also, each of the operation modes Q1 to Q3 represents an operation mode in the case in which, when the second laundry treating device starts to operate during the operation of the first laundry treating device, the operation of the first heater of the first laundry treating device is stopped, and the operation of the second heater is initiated.

Each of the operation modes Q4 to Q7 represents an operation mode in the case in which, even when the second laundry treating device starts to operate during the operation of the first laundry treating device, the operation of the first heater of the first laundry treating device is continued.

In detail, in the operation mode Q1, when the second laundry treating device starts to operate during the operation of the first heater (Mᵢ), the operation of the first heater is stopped (Mₛ). Subsequently, the operation of the second heater is initiated, and is finished after the water in the second washing tub is heated to the second predetermined temperature (S_{if}). Thereafter, the operation of the first heater is again executed, and is finished after the water in the first washing tub is heated to the first predetermined temperature (M_{f}).

In the operation mode Q2, when the second laundry treating device starts to operate during the operation of the first heater (Mᵢ), the operation of the first heater is stopped (Mₛ). Subsequently, the operation of the second heater is initiated (Sᵢ). The operation of the second heater is continued for a predetermined time, and then stopped. At this time, the operation of the first heater is again executed (M). Subsequently, the operation of the first heater is temporarily stopped. At this time, the operation of the second heater is again executed, and is finished after the water in the second washing tub is heated to the second predetermined temperature (S_{f}). Thereafter, the operation of the first heater is again executed, and is finished after the water in the first washing tub is heated to the first predetermined temperature (M_{f}).

In the operation mode Q3, when the second laundry treating device starts to operate during the operation of the first heater (Mᵢ), the operation of the first heater is stopped (Mₛ). Subsequently, the operation of the second heater is initiated (Sᵢ). The operation of the second heater is continued for a predetermined time, and then stopped. At this time, the operation of the first heater is again executed, and is finished after the water in the first washing tub is heated to the first predetermined temperature (M_{f}). Subsequently, the operation of the second heater is again executed, and is finished after the water in the second washing tub is heated to the second predetermined temperature (S_{f}).

In the operation mode Q4, when the second laundry treating device starts to operate during the operation of the first heater (Mᵢ), the operation of the first heater is continued without being stopped. The operation of the first heater is finished after the water in the first washing tub is heated to the first predetermined temperature (M_{f}). Subsequently, the operation of the second heater is initiated (Sᵢ), and is finished after the water in the second washing tub is heated to the second predetermined temperature (S_{if}).

In the operation mode Q5, when the second laundry treating device starts to operate during the operation of the first heater (Mᵢ), the operation of the first heater is continued without being stopped (M). The operation of the first heater is stopped after a predetermined time elapses. Subsequently, the operation of the second heater is initiated (Sᵢ), and is finished after the water in the second washing tub is heated to the second predetermined temperature (S_{if}). Thereafter, the operation of the first heater is again executed, and is finished after the water in the first washing tub is heated to the first predetermined temperature (M_{f}).

In the operation mode Q6, when the second laundry treating device starts to operate during the operation of the first heater (Mᵢ), the operation of the first heater is continued without being stopped (M). The operation of the first heater is stopped after a predetermined time elapses. Subsequently, the operation of the second heater is initiated (Sᵢ). The operation of the second heater is continued for a predetermined time, and then stopped. At this time, the operation of the first heater is again executed, and is finished after the water in the first washing tub is heated to the first predetermined temperature (M_{f}). Subsequently, the operation of the second heater is again executed, and is finished after the water in the second washing tub is heated to the second predetermined temperature (S_{f}).

In the operation mode Q7, when the second laundry treating device starts to operate during the operation of the first heater (Mᵢ), the operation of the first heater is continued without being stopped (M). The operation of the first heater is stopped after a predetermined time elapses. Subsequently, the operation of the second heater is initiated (Sᵢ).

Subsequently, the operation of the second heater is stopped, and the operation of the first heater is again executed (M). The operation of the first heater is stopped after a predetermined time elapses. At this time, the operation of the second heater is again executed, and is finished after the water in the second washing tub is heated to the second predetermined temperature (S_{f}). Thereafter, the operation of the first heater is again executed, and is finished after the water in the first washing tub is heated to the first predetermined temperature (M_{f}).

Meanwhile, the operation modes Q8 to Q14 carried out when the first laundry treating device starts to operate during the operation of the second laundry treating device are similar to the operation modes Q1 to Q7, respectively. However, they are reverse to each other in terms of the operation order of the first and second laundry treating devices, namely, the order of M and S.

As in the operation modes Q1 to Q3 and the operation modes Q8 to Q10, the heating procedure in the laundry treating apparatus control method according to the present invention may include an intermediate heating step for executing the operation of the heater included in one laundry treating device, which starts to operate during the operation of the other laundry treating device, after the stopping of the operation of the heater included in the other laundry treating device.

The intermediate heating step may be step S_{if} in the operation mode Q1, and step Sᵢ in the operation mode Q2 or Q3. Also, the intermediate heating step may be step M_{if} in the operation mode Q8, and step Mᵢ in the operation mode Q9 or Q10.

Also, the heating procedure may include an additional heating step for again executing the operation of the heater included in the other laundry treating device after the finish of the intermediate heating step. Here, the additional heating step may be step M_{f} in the operation mode Q1, step M in the operation mode Q2, and step M_{f} in the operation mode Q3. Also, the additional heating step may be step S_{f} in the operation mode Q8, step S in the operation mode Q9, and step S_{f} in the operation mode Q10.

Also, as in the operation mode Q2 or Q3 and the operation mode Q9 or Q10, the first and second heaters may operate alternately until the temperature of water supplied to one of the washing tubs reaches a predetermined temperature.

As in the operation modes Q4 to Q7 and the operation modes Q11 to Q14, the heating procedure may include a continuous heating step for continuously executing the operation of the heater included in the other laundry treating device, which is in operation, and an intermediate heating step for executing the operation of the heater included in the laundry treating device, which starts to operate during the operation of the other laundry treating device.

Here, the continuous heating step may be step M_{f} in the operation mode Q4, and step M in each of the operation modes Q5 to Q7. The intermediate heating step may be step S_{if} in the operation mode Q4 or Q5, and step Sᵢ in the operation mode Q6 or Q7.

The continuous heating step and the intermediate heating step may be alternately executed until the temperature of water supplied to one of the washing tubs reaches a predetermined temperature. Of course, the intermediate heating step may be executed after, through the continuous heating step, the temperature of water supplied to the associated washing tub is heated to a predetermined temperature.

Meanwhile, when one of the first and second heaters operates to perform a washing mode at a predetermined temperature or more, the other heater may not operate.

Although the laundry treating apparatus control method according to the illustrated embodiment has been described in conjunction with the procedure for operating the heaters respectively included in two laundry treating devices, the present invention may be applied to a plurality of laundry treating devices, without being limited to the above-described embodiment.

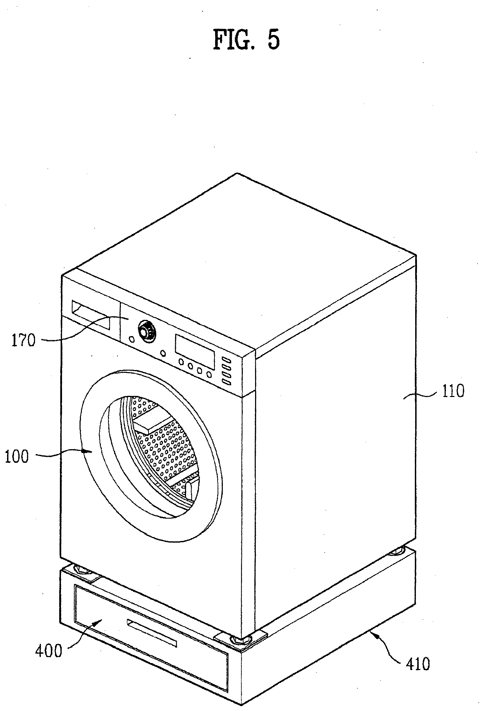

FIG. 5 illustrates another embodiment of the laundry treating apparatus according to the present invention.

Different from the previous embodiment, in the laundry treating apparatus according to this embodiment, the first laundry treating device 100 is installed in the cabinet 110, namely, a first cabinet, whereas the second laundry treating device, which is designated by reference numeral 400 in FIG. 5, is installed in a second cabinet 410 forming a space independent of the first cabinet 110.

The control panel 170, which controls both the first and second laundry treating devices, may be arranged at the front side of the first cabinet 110.

The procedure for supplying water to the first washing tub (not / shown) included in the first laundry treating device 100 and the second washing tub (not shown) included in the second laundry treating device 400 is substantially identical to the above-described laundry treating device control method.

The laundry treating apparatus and control method thereof according to the present invention provide the following effects.

First, there is an advantage in that it is possible to simultaneously wash different kinds of laundry required to be independently washed, by simultaneously operating the first and second laundry treating devices, which operate independently.

Second, there is an advantage in that it is possible to secure cleanliness while reducing the consumption of electricity by selectively using different laundry treating devices in accordance with the amount and kind of laundry.

Third, there is an advantage in that it is possible to more efficiently and safely control the laundry treating devices by controlling the heaters respectively installed in the laundry treating devices in accordance with the laundry treating condition.

For example, there is an advantage in that it is possible to prevent heaters installed in two or more washing tubs from being overloaded by selectively driving the heaters, and thus to safely use the laundry treating device.

It will be apparent to those skilled in the art that various modifications and variations can be made in the present invention without departing from the spirit or scope of the inventions. Thus, it is intended that the present invention covers the modifications and variations of this invention provided they come within the scope of the appended claims and their equivalents.

The present invention is further defined by the following items
1. A method of controlling a laundry treating apparatus comprising at least a first and a second laundry treating device and a controlling device comprising the following steps:
   inputting information on operation in order to operate said first laundry treating device and said second laundry treating device adjacent to the first laundry treating device; and,
   operating the first laundry treating device and the second laundry treating device with running a first heater provided at the first laundry treating device and a second heater provided at the second laundry treating device alternatively under control of said controlling device.
2. The method of item 1, wherein information on operation of the first laundry treating device and the second laundry treating device is inputted before the first heater and the second heater are run.
3. The method of item 1, wherein information on operation of the other is inputted while one of the first laundry treating device and the second laundry treating device is run.
4. The method of item 2, wherein the operating includes a first heating step running a first heater to heat water supplied to a first tub, a second heating step running a second heater supplied to a second tub.
5. The method of item 4, one of the first heating step and the second heating step is run after the other has finished.
6. The method of item 4, wherein the first heating step and the second heating step are run alternatively untill the temperature of water in one of the first tub and the second tub is equal to a predetermined temperature of water.
7. The method of item 4, wherein a performing order between the first heating step and the second heating step is decided according to a predetermined algorithm.
8. The method of item 3, wherein the operating includes an intermediate heating step to run a heater provided at a newly operating first or second laundry treating device after stopping the running of the other heater provided at the other operating second or first laundry treating device.
9. The method of item 8, wherein the operating includes an additional heating step to run a heater provided at the other operating second or first laundry treating device after the intermediate heating step has finished.
10. The method of item 8, wherein a heater which is run during the intermediate heating step and a heater provided at the other operating second or first laundry treating device are operated alternatively and repeatedly.
11. The method of item 3, wherein the operating includes a successive heating step to maintain to run a heater provided at an operating first or second laundry treating device, and an intermediate heating step to run a heater provided at a newly operating second or first laundry treating device.
12. The method of item 11, wherein the intermediate water supplying step is operated after the successive heating step has finished increasing a temperature of water in the tub of the operating laundry treating device to a predetermined temperature.
13. The method of item 11, wherein the successive heating step and the intermediate heating step are operated alternatively until the temperature of water in one of the first tub and the second tub is equal to a predetermined temperature of water.
14. The method of item 3, wherein a heater provided at a newly operating first or second laundry treating device is only run during the operating.
15. The method of any of items 1 to 14, wherein one of a first heater and a second heater is not run, when the other is run in order to perform a washing mode in a predetermined temperature range.
16. A laundry treating apparatus comprising:
   a first laundry treating device;
   a second laundry treating device adjacent to the first laundry treating device
   a first heater provided at the first laundry treating device;
   a second heater provided at the second laundry treating device; and
   a controlling device to run the first heater and the second heater alternatively in operating the first laundry treating device and the second laundry treating device.
17. The laundry treating device of item 16, further comprising a first temperature sensor to sense the temperature of water in a first tub provided at the first laundry treating device, and a second temperature sensor to sense the temperature of water in a second tub provided at the second laundry treating device.
18. The laundry treating device of item 16 or 17, wherein a priority order between the first heater and the second heater is decided according to heat capacity of water supplied to the first tub and heat capacity of water supplied to the second tub.
19. The laundry treating device of any of items 16 to 18, wherein the controlling device includes a first control panel to control the first laundry treating device, and an second control panel to control the second laundry treating device.
20. The laundry treating device of item 19, wherein the first control panel and the second control panel is provided as one body.

## Claims

1. A method of controlling a laundry treating apparatus including at least a first laundry treating device (100) and a second laundry treating device (200; 400), the method comprising:
a step of inputting information to operate both of the first laundry treating device (100) and the second laundry treating device (200,400), and
a step of operating a first heater (190) provided at the first laundry treating device (100) and a second heater (290) provided at the second laundry treating device (200),
**characterized in that** the step of inputting information comprises:
inputting a command to operate of the first laundry treating device (100) and the second laundry treating device (200,400) simultaneously, wherein the operation of the first heater (190) and the second heater (290) comprises:
initiating the operation of the first heater,
finishing the operation of the first heater,
initiating the operation of the second heater,
finishing the operation of the second heater.

2. The method of claim 1, wherein the second laundry treating device (200,400) is provided as an auxiliary apparatus of first laundry treating device (100).

3. The method of claim 1 or 2, wherein the amount of laundry that can be accommodated in the second laundry treating device (200,400) differs from the amount of laundry that can be accommodated in first laundry treating device (100).

4. The method of any one of claims 1 to 3, wherein the finishing the operation of the first heater is performed after the water in the first laundry treating device (100) is heated to a first predetermined temperature,
wherein the finishing the operation of the second heater is performed after the water in the second laundry treating device (200,400) is heated to a second predetermined temperature.
